# EUROPEAN PATENT APPLICATION

(11) **EP 1 215 791 A1**
(43) Date of publication of application: **19.06.2002**
(21) Application number: 01126080.9
(22) Date of filing: 02.11.2001
(51) Int. Cl.: H02G 15/013, H02G 15/076

(54) **Cable entry ports**

(30) Priority: 14.12.2000 GB 0030568
(71) Applicant: CCS Technology, Inc., Wilmington, DE 19803 (US)
(72) Inventor: Blackhall, Edward Duncan, Prescot, Mersyside, L34 INA (GB)
(74) Representative: Sturm, Christoph, Dipl.-Ing.

(57) **Abstract**

A cable entry port for a joint or a termination enclosure is usable for making either a heat-shrink or a mechanical type of seal at the user's option. A tubular port member forming, or to form, a part of the enclosure has means (such as screw threads) spaced apart along its length for compressive engagement with opposite ends of a correspondingly dimensioned body of sealing material, for example a resilient sealing ring, that may be inserted into the tubular member and located therein at a substantial distance from one of its ends. The part of the tubular member adjoining that end in the alternative receives the heat-shrink sleeve, or may be cut off and discarded when making a mechanical seal.

## Description

This invention relates to cable entry ports by which optical and/or electric cables and/or flexible pipes may enter joint enclosures or the housings of terminal equipment (hereinafter together referred to as "enclosures"), to closure members for such enclosures, and to enclosures in which they are used.

Usually such enclosures need to be sealed to prevent the entry (or in some cases escape or both) of water and/or other liquids or gases. Alternative means of achieving a satisfactory seal are known, and while the selection may be made wholly or in part on the basis of personal preference, different options may be preferred depending on the location and circumstances in which they are to be used.

In particular, seals made using heat-shrinkable (or otherwise dimensionally "recoverable") sleeves may be preferred where the seal is unlikely to need to be removed and replaced and provided that the circumstances of installation allow the ready use of a flame torch, or whatever other agency may be needed to effect recovery of the sleeving to form the seal. On the other hand, a "mechanical" seal may be preferred if it is anticipated that either the cable or the joint or terminal equipment may need to be replaced or repositioned within the lifetime of the equipment, or if the application of a flame is considered hazardous or difficult. By a "mechanical" seal is meant a seal that is at least initially formed by deforming a relatively soft material to bring it into sealing engagement with the port and with the cable or cables entering through it. Deformation may be elastic, using an apertured resilient bung, for instance of silicone rubber, in which case pressure will normally be sustained for the life of the installation; or it may be wholly or partly plastic, for instance using a soft butyl rubber composition (as described in US5,608,189) or when appropriate a cold-setting resin composition (as used in "barrier" glands, described, for instance, in GB1524683A and US4301325A). In some cases, preferences may be different for the ports admitting different cables to the same enclosure, and it is therefore undesirably restrictive if a different enclosure has to be selected depending on the type of seal to be used.

In accordance with one aspect of the present invention, a cable entry port for an enclosure comprises a tubular member forming, or to form, a part of the enclosure having first and second ends and further having means spaced apart along the length of the tubular member for compressive engagement with opposite ends of a correspondingly dimensioned body of sealing material that may be inserted into the tubular member and located therein at a substantial distance from said first end.

At least one of the said means for compressive engagement preferably includes means for generating movement in the longitudinal direction of the tubular member for bringing about the compressive engagement of the sealing material when required and for adjusting or releasing it if required. The preferred means for generating movement, at least in the usual case when the port is of circular cross-section, is a screw thread which will interact with a tubular bush having a mating screw thread to enable it to be urged towards or withdrawn from the sealing ring. Preferably both means for compressive engagement comprises such a thread or other means for generating movement, but alternatively one of them could provide a fixed abutment such as a flat or recessed annular shoulder or flange.

Preferably the (or each) screw thread on the tubular member is a female thread and the or each bush has a male thread.

Preferably one of the means for compressive engagement is located at or near the second end of the tubular member.

The length of the tubular member between its first end and the nearer of the means for compressive engagement with the sealing material provides (either by itself or together with a further part of its length) a sufficient support to receive a heat-shrunk or otherwise dimensionally recovered sleeve when that is preferred, and in such cases no sealing material or threaded bushes will be required. In the alternative, when a mechanical seal is made using a sealing material, this length is superfluous and is preferably cut off before the seal is made. Preferably the port comprises a formation or marking to indicate an appropriate cutting position.

If the port is to be used in hazardous locations, it may (apart from the sealing material or dimensionally recoverable sleeve, as the case may be) made of a suitable metal. For example, stainless steel, aluminium, brass or gunmetal may be preferred in some hazardous conditions. Otherwise, polymeric materials such as PVC, polyethylene, ABS or halogen-free flame retardant compositions (for instance of ethylene-vinyl acetate or ethylene-ethyl acrylate compositions filled with alumina trihydrate) will usually be preferred. At least when the port is made of a polymeric material, it preferably includes a closure sealing one of its ends (preferably its first end) which may be cut off (again preferably at an indicating formation or marking) when the port is to be used: this may be more economical and convenient than sealing an open port when it is not to be used.

The closure member in accordance with the invention includes a body for forming part of an enclosure and at least one cable entry port in accordance with the invention attached to it in a fluid-tight manner at the second end of the tubular member of the port, preferably monolithically, to form a passage through the body. Preferably the closure member comprises several cable entry ports and all, or at least more than one, of them are in accordance with the invention.

The enclosure in accordance with the invention comprises a housing and at least one cable entry port in accordance with the invention attached to it in a fluid-tight manner at the second end of the tubular member of the port to form a passage into the enclosure. Preferably the enclosure comprises several cable entry ports and all, or at least more than one, of them are in accordance with the invention. The enclosure may include one, two or unusually more than two closure members in accordance with the invention. For example, a bell-type joint enclosure (sometimes misleadingly called a "butt" joint) may have one closure member in accordance with the invention forming its base and through which all the cables enter, while a straight-through joint may have two closure members in accordance with the invention, one at each end of a joint sleeve, through each of which at least one cable enters.

The invention includes the combination of the port, closure member or enclosure described with at least one dimensionally recoverable sleeve and at least one mechanical seal for engaging a cable therewith. Where there is more than one port, the combination (or kit) preferably includes as many dimensionally recoverable sleeves and as many mechanical seals as there are ports.

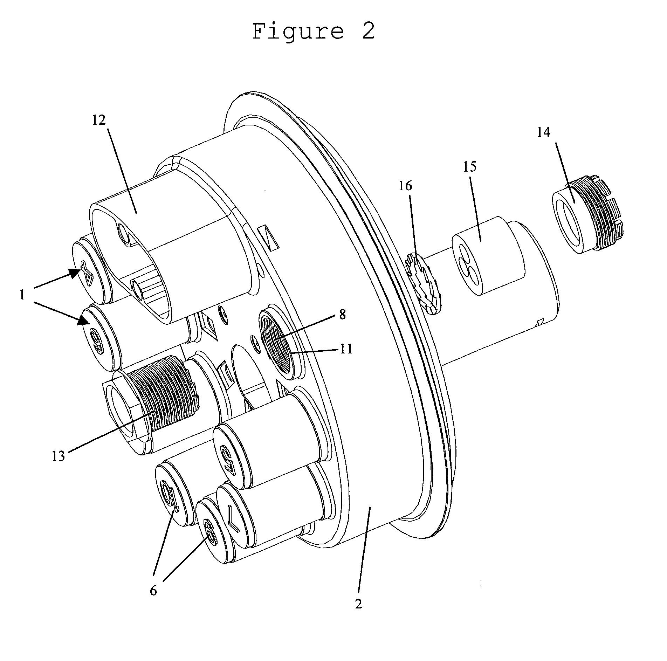

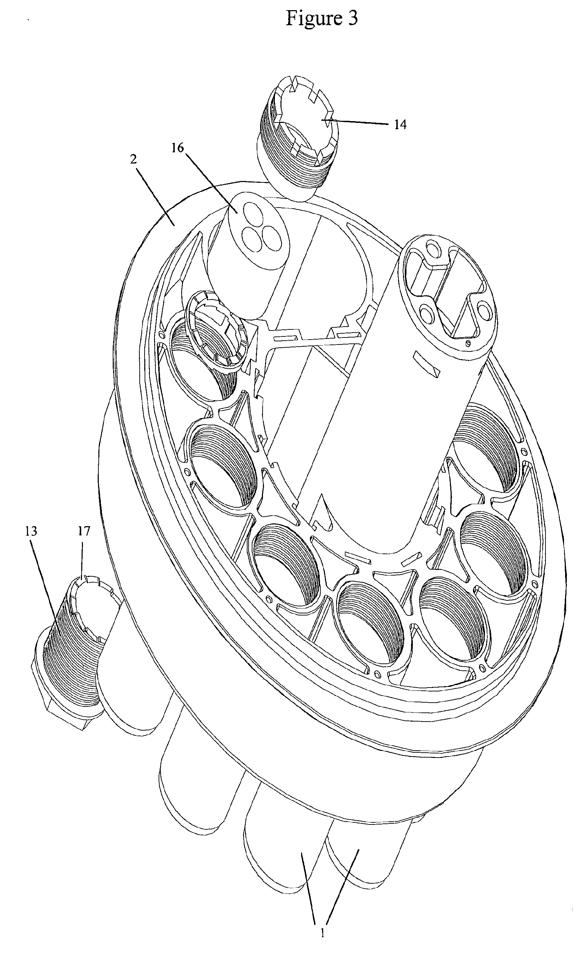

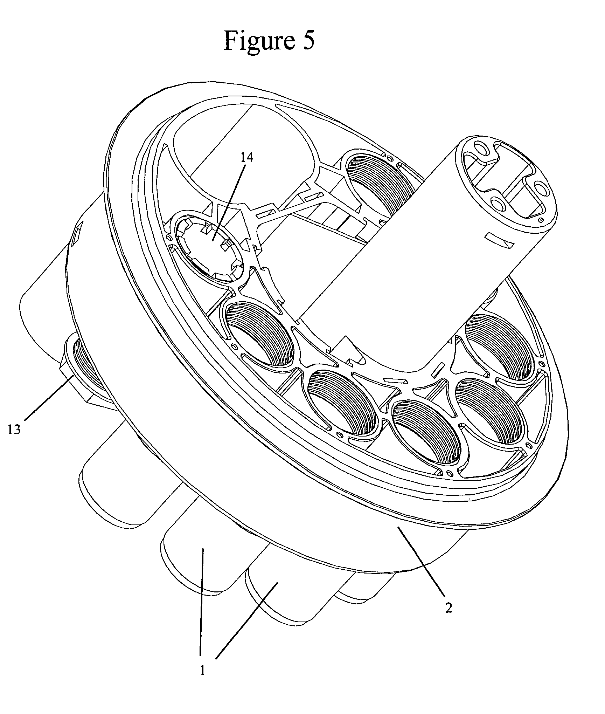

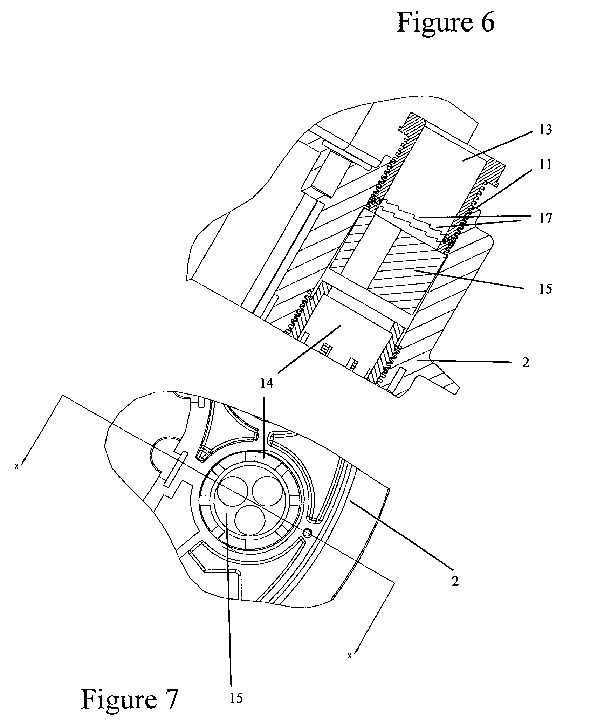

The invention will be further described, by way of example, with reference to the accompanying drawings in which:

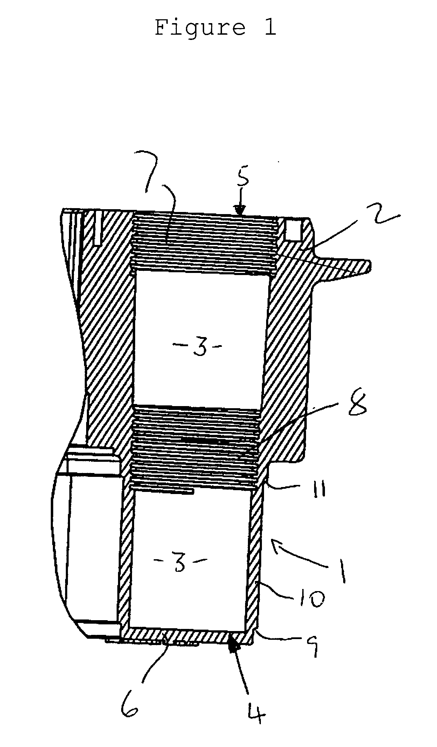

Figure 1 is a cross-section through one form of port in accordance with the invention forming part of a closure member and of an enclosure;
each of Figures 2 to 5 is a view of a closure member in accordance with the invention including the port of Figure 1, shown with one port in stages of assembly with a mechanical seal; and Figures 6 and 7 are details of the mechanical seal so formed.

The port 1 is shown as one of a plurality of broadly like ports (they may differ in dimensions to better accommodate different cable sizes, if preferred) moulded in one piece with a plate 2 which is suitable for sealing engagement with a bell or (in the case of a straight-through joint) a joint sleeve.

The port provides a passage 3 which is of circular cross-section and is slightly tapered so that its diameter increases from a first end 4 (normally intended to be the outside end in relation to a joint enclosure or terminal equipment housing) to a second end 5. The first end is moulded with a disc 6 to provide a seal when this particular port is not to be used.

Adjacent to its second end 5, the port is formed with a first female screw thread 7 and a second female screw thread 8 of slightly smaller diameter is formed in it at a position spaced from both ends.

When it is desired to use the port with a heat-shrinkable or otherwise dimensionally recoverable sleeve, the disk 6 will be removed, and a first indicator shoulder 9 is provided to facilitate this by showing the optimum cutting position. The sleeve is positioned to surround the accessible part 10 of the port and an adjacent part of a cable extending through the port, and is shrunk into sound mechanical and fluid-tight engagement with it by application of a flame or hot air gun, or in other manner appropriate to the sleeve used.

Alternatively, a mechanical seal may be made by inserting mating threaded bushes into the screw threads 7 and 8 with a resilient sealing ring (or other sealing material)between them and tightening by screwing up either or both of the bushes. When this option is used, it is normally preferable (and may be essential if it is desired to have access to the bush engaging thread 8) to cut off the port at the position of a second indicator shoulder 11, discarding the part 10 along with the closure disc 6.

Figures 2 and 3 show, from different angles, a complete closure member in accordance with the invention prepared for, and together with preferred components for making, a mechanical seal around three small cables grouped in one of the ports while Figures 4 and 5 show these parts assembled together. The closure member has eight ports 1 in accordance with the invention, plus an oval port 12 (not in accordance with the invention) for use if it is desired to enter a loop of uncut cable into the joint. One of the ports in accordance with the invention has been prepared by cutting at the shoulder 11, so exposing the screw thread 8. A mating threaded bush 13 is provided for screwing into this thread 8 and a second threaded bush 14 and these receive between them a resilient 3-hole sealing bung 15, and when tightened compress it. A shake-proof washer 16 is preferably interposed between one of the threaded bushes and the ring 15, which may usefully have ratchet teeth 17 to engage it (alternatively a plain skid washer could be used).

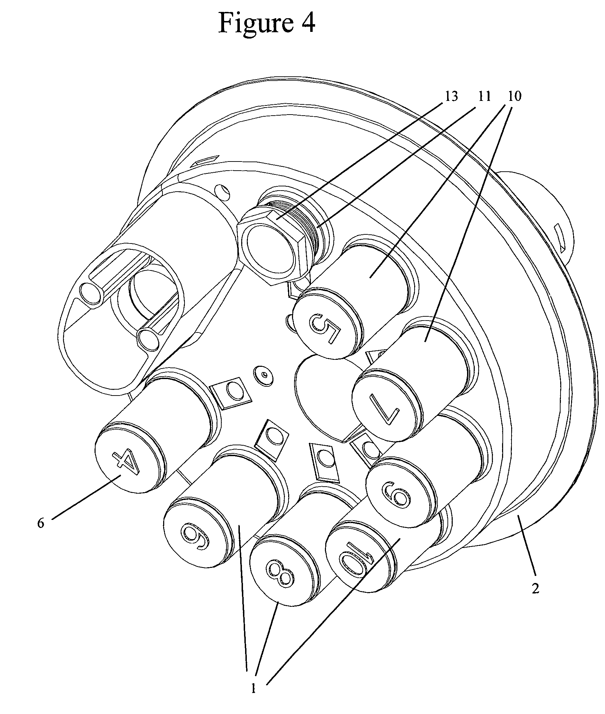

Figures 4 to 7 show these components in assembled positions (but for clarity un-tightened and without any cables in place).

Any discussion of the background to the invention herein is included to explain the context of the invention. Where any document or information is referred to as "known", it is admitted only that it was known to at least one member of the public somewhere prior to the date of this application. Unless the content of the reference otherwise clearly indicates, no admission is made that such knowledge was available to the public or to experts in the art to which the invention relates in any particular country (whether a member-state of the PCT or not), nor that it was known or disclosed before the invention was made or prior to any claimed date. Further, no admission is made that any document or information forms part of the common general knowledge of the art either on a world-wide basis or in any country and it is not believed that any of it does so.

## Claims

1. A cable entry port for an enclosure comprising a tubular member forming, or to form, a part of the enclosure having first and second ends and further having means spaced apart along the length of the tubular member for compressive engagement with opposite ends of a correspondingly dimensioned body of sealing material that may be inserted into the tubular member and located therein at a substantial distance from said first end.

2. A port as claimed in claim 1 in which at least one of the said means for compressive engagement includes means for generating movement in the longitudinal direction of the tubular member for bringing about the compressive engagement of the sealing material when required and for adjusting or releasing it if required.

3. A port as claimed in claim 2 of circular cross-section and in which the said means for generating movement is a screw thread which will interact with a tubular bush having a mating screw thread to enable it to be urged towards or withdrawn from the sealing ring.

4. A port as claimed in claim 2 or claim 3 in which both means for compressive engagement comprises such means for generating movement.

5. A port as claimed in claim 2 or claim 3 in which one of the means for compressive engagement provides a fixed abutment.

6. A port as claimed in any one of claims 1-6 in which the body of sealing material is a resilient bung.

7. A port as claimed in any one of claims 1-6 in which one of the means for compressive engagement is located at or near the second end of the tubular member.

8. A port as claimed in any one of claims 1-7 having a formation or marking to indicate a cutting position to enable the length of the tubular member between its first end and the nearer of the means for compressive engagement with the sealing material to be removed when a mechanical seal is to be made.

9. A cable entry port substantially as described with reference to and as shown in the drawing.

10. A closure member including a body for forming part of an enclosure and at least one cable entry port as claimed in any one of claims 1-9 attached to it in a fluid-tight manner at the second end of the tubular member of the port to form a passage through the body.

11. An enclosure comprising a housing and at least one cable entry port as claimed in any one of claims 1-9 attached to it in a fluid-tight manner at the second end of the tubular member of the port to form a passage into the enclosure.

12. An enclosure comprising one or two closure members as claimed in claim 10.

13. A port as claimed in any one of claims 1-9 in combination with at least one dimensionally recoverable sleeve and at least one mechanical seal for engaging a cable therewith.

14. A closure member claimed in claim 10 in combination with at least one dimensionally recoverable sleeve and at least one mechanical seal for engaging a cable therewith.

15. An enclosure as claimed in claim 11 or claim 12 in combination with at least one dimensionally recoverable sleeve and at least one mechanical seal for engaging a cable therewith.
